# EUROPEAN PATENT SPECIFICATION

(11) **EP 1 332 289 B1**
(45) Date of publication and mention of the grant of the patent: **14.07.2004**
(21) Application number: 01980061.4
(22) Date of filing: 18.10.2001
(51) Int. Cl.: F04C 27/00, F16J 15/00, F16J 15/44

(54) **ROTOR SHAFT SEALING**
WELLENABDICHTUNG
SCELLAGE D'ARBRE DE ROTOR

(30) Priority: 09.11.2000 BE 200000714
(43) Date of publication of application: 06.08.2003
(73) Proprietor: ATLAS COPCO AIRPOWER N.V., 2610 Wilrijk (BE)
(72) Inventor: STALJANSSENS, Erik, Colette, Dominique, A., B-2610 Antwerpen (BE)
(74) Representative: Donné, Eddy
(86) International application number: PCT/BE2001/000183
(87) International publication number: WO 2002/038961

(56) References cited:
- US-A- 3 880 434
- US-A- 4 482 194
- US-A- 4 487 563
- PATENT ABSTRACTS OF JAPAN vol. 013, no. 094 (M-804), 6 March 1989 (1989-03-06) -& JP 63 285279 A (HITACHI LTD), 22 November 1988 (1988-11-22)
- PATENT ABSTRACTS OF JAPAN vol. 005, no. 093 (M-074), 17 June 1981 (1981-06-17) -& JP 56 039361 A (HITACHI LTD), 15 April 1981 (1981-04-15)
- PATENT ABSTRACTS OF JAPAN vol. 004, no. 105 (M-023), 26 July 1980 (1980-07-26) -& JP 55 064172 A (HITACHI LTD), 14 May 1980 (1980-05-14)
- PATENT ABSTRACTS OF JAPAN vol. 1998, no. 11, 30 September 1998 (1998-09-30) -& JP 10 148198 A (MITSUBISHI HEAVY IND LTD), 2 June 1998 (1998-06-02)

## Description

This invention relates to a method for sealing a shaft of a rotor in a compressor element, between a rotor chamber formed in a housing, in which at least one rotor for the compression of gas is situated, and a bearing chamber, formed in the housing, in which at least one bearing, lubricated, with lubricating liquid, for the shaft is situated, which sealing element comprises a floating gas sealing and a floating liquid sealing.

Volumetric compressors comprise one or more rotors which are arranged in a rotor chamber where gas under pressure is produced. These rotors are fixed upon a shaft beared it opposite sides outside of the rotor chamber in bearing chambers adjoining thereto, whereby these bearings are lubricated by means of lubricating liquid, mostly oil. Mostly, the bearing chambers are connecting to the interior of a gearwheel case which also is lubricated with oil.

It is obvious that the rotor chamber and each bearing chamber must be separated from each other, such that no compressed air flows towards a second chamber and that, in the first place in oil-free compressors, no oil will leak into the rotor chamber.

As a consequence, the passage of the shaft between the rotor chamber of a bearing chamber is sealed with a double sealing, consisting of a gas sealing combined with a liquid sealing, as disclosed in US 4.487.563.

Mostly, floating sealings are used which are movable in respect to the housing, in consideration of the fact that sealings mounted fixedly in the housing do not offer the possibility of absorbing the production and mounting tolerances.

The floating liquid sealing may be a thread sealing, whereas the gas sealing may be of the labyrinth type.

The application of the gas sealing and the liquid sealing in the housing is relatively time-consuming and expensive.

The invention aims at a method for sealing the shaft of a rotor of a compressor element which avoids these disadvantages and is relatively fast and inexpensive.

According to the invention, this aim is achieved in that the gas sealing and the liquid sealing together are pre-mounted in a sleeve which subsequently is provided in the housing.

Preferably, the gas sealing and/or the liquid sealing are secured in the sleeve by the radial spring effect of a divided spring in a groove in the sleeve, whereby this divided spring also provides for the axial pressure force of this gas and/or liquid sealing against the shoulder of the sleeve.

In order to provide the axial pressure force of these sealing elements, use is made of springs and rings, whereas the securing of the sealings is obtained by means of clamping rings, so-called "circlips", which is more complicated.

The invention also relates to any sealing which is suitable for applying the method according to the invention.

Thus, the invention relates to a sealing element for sealing a shaft of a rotor in a compressor element, between a rotor chamber, formed in a housing, in which at least one rotor for the compression of gas is situated, and a bearing chamber, formed in the housing, where at least one bearing, lubricated with lubricating liquid, for the shaft is situated, which sealing element comprises a floating gas sealing and a floating liquid sealing and which is characterized in that the gas sealing and the liquid sealing are mounted together in a sleeve.

In a particular form of embodiment of the invention, the sleeve, between the gas sealing and the liquid sealing, is provided with at least one degassing channel.

Preferably, the sleeve, at least around the liquid sealing and/or the gas sealing, is provided at its interior side with a groove in which a divided spring is provided which pushes this liquid sealing and/or the gas sealing axially against a shoulder of the sleeve.

Between a part of the liquid sealing and the shoulder against which it is pushed by the spring, a resilient sealing ring may be provided.

With the intention of better showing the characteristics of the invention, hereafter, as an example without any limitative character, a preferred form of embodiment of a method for sealing the shaft of a rotor of a compressor element and of a sealing element used therewith according to the invention are described, with reference to the accompanying drawings, wherein:
Figure 1 schematically represents a cross-section of a part of a compressor element according to the invention;
Figure 2, more detailed, shows a cross-section of the sealing element from the compressor element according to figure 1.

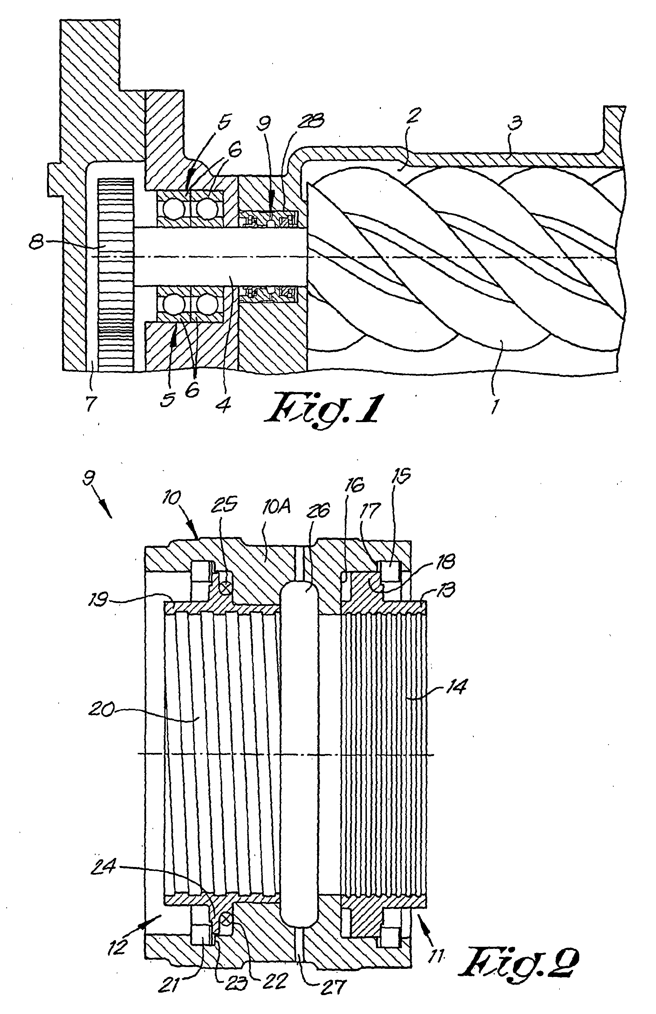

In figure 1, a screw-type compressor element is represented, comprising two cooperating rotors 1 which are arranged in a rotor chamber 2.

The rotor chamber 2 is limited by a housing 3. At both extremities, each rotor 1 is provided with a shaft 4 which is beared by means of a bearing 5 which is arranged within a bearing chamber 6 formed inside housing 3.

For simplicity's sake, in figure 1 only one extremity of one rotor 1 and its bearing 5 are represented.

The bearing chambers 6 connect to the interior of a gearwheel case 7 in which the non-represented drive of the synchronization gearwheels 8, which provide for the synchronization of the rotors 1, is arranged.

Into this gearwheel case 7 and onto the bearings 5, oil is supplied for lubrication.

In order to prevent that compressed gas from the rotor chamber 2 flows to the bearings 5 and the gearwheel case 7 or oil from these bearings 5 and gearwheel cases 8 ends up in the rotor chamber 2 and, therefore, in the compressed gas, the shaft 4 between the rotor chamber 2 and the bearing chamber 6 is surrounded by a sealing element 9.

As represented in detail in figure 2, this sealing element 9 substantially consists of a sleeve 10 in which, at the side of the rotor chamber 2, a floating gas sealing 11 and, at the side of the bearing 5, a floating oil sealing 12 are mounted.

The gas sealing 11 is a labyrinth sealing which, thus, consists of a ring 13 which is provided with a series of adjacent ring-shaped grooves 14 in its interior.

With its extremity situated most distant from the rotor chamber 2, the ring 13, by the intermediary of a divided spring 15, is pushed against a shoulder 16 which is formed by a narrowing of the sleeve 10.

The divided spring 15 consists of a cylinder spring with one convolution which is interrupted over 5 to 10° and which, therefore, is not only springy in axial direction, but also provides for a radial spring effect.

Due to the radial spring effect, this spring 15 becomes situated in a groove 17 which is provided around the ring 13 in the interior side of the sleeve 10. The spring 15 is taken up between a side wall of this groove 17 and a collar 18 at the exterior side of the ring 13, such that 'the gas sealing 11 is secured in axial direction.

The liquid sealing 12 is a floating thread sealing and consists of a ring 19, in the interior side of which a groove 20 in screw-thread shape is provided.

The liquid sealing 12 is secured in a manner analogous to the gas sealing 11 and is pushed by means of a second divided spring 21, which is identical to the spring 15, against a shoulder 22 of the sleeve 10.

By radial spring effect, the spring 21 is situated in a groove 23 which is provided in the sleeve 10 around the ring 19.

At its exterior side, the ring 12 has a collar 24, and it is with this collar 24 that the ring 12, under the influence of the spring 21 and by the intermediary of a resilient sealing ring 25, is pushed against the shoulder 22.

The aforementioned shoulders 16 and 22 form the side walls of a part 10A, with a smaller diameter, of the sleeve 10. In this part 10A, a groove 26 is provided, onto which a number of degassing channels 27 give out.

The sealing 9 is pre-composed of the sleeve 10, the gas sealing 11 and the liquid sealing 12 and then, as a whole, is slid over the shaft 4. The sealing 9 is fixedly clamped in a recess 28 of the housing 3.

The housing 3 is provided with an outlet which connects to the degassing channels 27, such that gas under pressure, which possibly still might leak through the gas sealing 11, can escape into the ambient atmosphere, and that the space between this gas sealing 11 and the liquid sealing remains at atmospheric pressure.

The sealing 9 can seal the shaft 4 in an efficient manner and can be provided in the housing 3 in a fast and simple manner.

The invention is in no way limited to the sealing method and a sealing used therewith described heretofore and represented in the accompanying drawings, on the contrary may such method and sealing be realized in various variants without leaving the scope of the invention, as defined in the accompanying claims.

## Claims

1. Method for sealing the shaft (4) of a rotor (2) in a compressor element, between a rotor chamber (2), formed in a housing (3), in which at least one rotor (1) for the compression of gas is situated, and a bearing chamber (6), formed in the housing (3), in which at least one bearing (5), lubricated with lubricating liquid, for the shaft (4) is situated, which sealing element (9) comprises a floating gas sealing (11) and a floating liquid sealing (12), **characterized in that** the gas sealing (11) and the liquid sealing (12) together are pre-mounted in a sleeve (10) which subsequently is provided in the housing (3).

2. Method according to claim 1, **characterized in that** the gas sealing (11) in the sleeve (10) is secured by the radial spring effect of a divided spring (15) in a groove (17) in the sleeve (10), whereby this divided spring (15) also provides for the axial pressure force of this gas sealing (11) against a shoulder (16) of the sleeve (10).

3. Method according to claim 1 or 2, **characterized in that** the liquid sealing (12) in the sleeve (10) is secured by the radial spring effect of a divided spring (21) in a groove (23) in the sleeve (10), whereby this divided spring (21) also provides for the axial pressure force of this liquid sealing (12) against a shoulder (22) of the sleeve (10).

4. Sealing element for sealing the shaft of a rotor (1) in a compressor element, between a rotor chamber (2), formed in a housing (3) in which at least one rotor (1) for the compression of gas is situated, and a bearing chamber (6), formed in the housing (3), where at least one bearing (5), lubricated with lubricating liquid, for the shaft (4) is situated, which sealing element (9) comprises a floating gas sealing (11) and a floating liquid sealing (12), **characterized in that** the gas sealing (11) and the liquid sealing (12) are mounted together in a sleeve (10).

5. Sealing element according to claim 4, **characterized in that** the sleeve (10), between the gas sealing (11) and the liquid sealing (12), is provided with at least one degassing channel.

6. Sealing element according to claim 4 or 5, **characterized in that** the sleeve (10) around the gas sealing (11) is provided at its interior side with a groove (17) in which a divided spring (15) is provided which pushes the gas sealing (11) axially against a shoulder (16) of sleeve (10).

7. Sealing element according to claim 6, **characterized in that** the gas sealing (11) comprises a ring (13) which, at its exterior, is provided with a collar (18) and that the divided spring (15) effects onto this collar (18).

8. Sealing element according to any of the claims 4 to 7, **characterized in that** the sleeve (10) around the liquid sealing (12) is provided at its interior side with a groove (23) in which a divided spring (21) is provided which pushes the liquid sealing (12) axially against a shoulder (22) of sleeve (10).

9. Sealing element according to claim 8, **characterized in that** between a part of the liquid sealing (12) and the shoulder (22) against which it is pushed by spring (21), a resilient sealing ring (25) is provided.

10. Sealing element according to claim 9, **characterized in that** the liquid sealing (12) comprises a ring (19) having a collar (24) at its exterior side and that the sealing ring (25) is provided between said collar (25) and the shoulder (22).

11. Sealing element according to any of the claims 4 to 10, **characterized in that** the gas sealing (11) is a labyrinth sealing.

12. Sealing element according to any of the claims 4 to 11, **characterized in that** the liquid sealing (12) is a thread sealing.

## Patentansprüche

1. Verfahren zum Abdichten der Welle (4) eines Rotors (2) in einem Kompressorelement zwischen einer Rotorkammer (2), gebildet in einem Gehäuse (3), in dem sich mindestens ein Rotor (1) für die Verdichtung von Gas befindet, und einer Lagerkammer (6), gebildet in dem Gehäuse (3), in dem sich mindestens ein Lager (5), geschmiert mit Schmierflüssigkeit, für die Welle (4) befindet, wobei das Abdichtungselement (9) eine schwimmende Gasabdichtung (11) und eine schwimmende Flüssigkeitsabdichtung (12) enthält, **dadurch gekennzeichnet, dass** die Gasabdichtung (11) und die Flüssigkeitsabdichtung (12) vormontiert sind in einer Büchse (10), die anschließend in dem Gehäuse (3) bereit gestellt wird.

2. Verfahren nach Anspruch 1, **dadurch gekennzeichnet, dass** die Gasabdichtung (11) in der Büchse (10) durch den radialen Federeffekt einer geteilten Feder (15) in einer Rille (17) in der Büchse (10) gesichert ist, wobei diese geteilte Feder (15) ebenfalls die axiale Druckkraft dieser Gasabdichtung (11) gegen einen Ansatz (16) der Büchse (10) schafft.

3. Verfahren nach Anspruch 1 oder 2, **dadurch gekennzeichnet, dass** die Flüssigkeitsabdichtung (12) in der Büchse (10) durch den radialen Federeffekt einer geteilten Feder (21) in einer Rille (23) in der Büchse (10) gesichert ist, wobei diese geteilte Feder (21) auch die axiale Druckkraft dieser Flüssigkeitsabdichtung (12) gegen einen Ansatz (22) der Büchse (10) schafft.

4. Abdichtungselement zum Abdichten der Welle eines Rotors (1) in einem Kompressorelement zwischen einer Rotorkammer (2), gebildet in einem Gehäuse (3), in dem sich mindestens ein Rotor (1) für die Verdichtung von Gas befindet, und einer Lagerkammer (6), gebildet in dem Gehäuse (3), in dem sich mindestens ein Lager (5), geschmiert mit Schmierflüssigkeit, für die Welle (4) befindet, wobei das Abdichtungselement (9) eine schwimmende Gasabdichtung (11) und eine schwimmende Flüssigkeitsabdichtung (12) enthält, **dadurch gekennzeichnet, dass** die Gasabdichtung (11) und die Flüssigkeitsabdichtung (12) zusammen in einer Büchse (10) montiert sind.

5. Abdichtungselement nach Anspruch 4, **dadurch gekennzeichnet, dass** die Büchse (10) zwischen der Gasabdichtung (11) und der Flüssigkeitsabdichtung (12) mit mindestens einem Gasabscheidungskanal versehen ist

6. Abdichtungselement nach Anspruch 4 oder 5, **dadurch gekennzeichnet, dass** die Büchse (10) um die Gasabdichtung (11) an ihrer Innenseite mit einer Rille (17) versehen ist, in der eine geteilte Feder (15) bereit gestellt ist, die die Gasabdichtung (11) axial gegen einen Ansatz (16) der Büchse (10) drückt.

7. Abdichtungselement nach Anspruch 6, **dadurch gekennzeichnet, dass** die Gasabdichtung (11) einen Ring (13) enthält, der außen mit einem Kragen (18) versehen ist, und dass die geteilte Feder (15) auf diesen Kragen (18) einwirkt.

8. Abdichtungselement nach einem der Ansprüche 4 bis 7, **dadurch gekennzeichnet, dass** die Büchse (10) um die Flüssigkeitsabdichtung (12) innen mit einer Rille (23) versehen ist, in der eine geteilte Feder (21) bereit gestellt ist, die die Flüssigkeitsabdichtung (12) axial gegen einen Ansatz (22) der Büchse (10) drückt.

9. Abdichtungselement nach Anspruch 8, **dadurch gekennzeichnet, dass** zwischen einem Teil der Flüssigkeitsabdichtung (12) und dem Ansatz (22), gegen den sie durch die Feder (21) gedrückt wird, ein elastischer Abdichtungsring (25) bereit gestellt ist.

10. Abdichtungselement nach Anspruch 9, **dadurch gekennzeichnet, dass** die Flüssigkeitsabdichtung (12) einen Ring (19) enthält, der außen einen Kragen (24) hat, und dass der Abdichtungsring (25) zwischen dem Kragen (25) und dem Ansatz (22) bereit gestellt ist.

11. Abdichtungselement nach einem der Ansprüche 4 bis 10, **dadurch gekennzeichnet, dass** die Gasabdichtung (11) eine Labyrinthabdichtung ist.

12. Abdichtungselement nach einem der Ansprüche 4 bis 11, **dadurch gekennzeichnet, dass** die Flüssigkeitsabdichtung (12) eine Gewindeabdichtung ist.

## Revendications

1. Procédé pour assurer l'étanchéité de l'arbre (4) d'un rotor (2) dans un élément de compresseur, entre une chambre de rotor (2), formée dans un logement (3), dans laquelle est situé au moins un rotor (1) pour la compression du gaz, et une chambre de palier (6), formée dans le logement (3), dans laquelle est situé au moins un palier (5) lubrifié avec un liquide de lubrification, pour l'arbre (4), ledit élément (9) assurant une étanchéité comprenant un joint d'étanchéité flottant (11) pour les gaz et un joint d'étanchéité flottant (12) pour les liquides, **caractérisé en ce que** le joint d'étanchéité pour les gaz (11) et le joint d'étanchéité pour les liquides (12) font l'objet d'un montage conjoint préalable dans un manchon (10) qui est placé par la suite dans le logement (3).

2. Procédé selon la revendication 1, **caractérisé en ce que** le joint d'étanchéité pour les gaz (11) dans le manchon (10) est fixé par l'effet élastique radial d'un ressort en deux parties (15) dans une rainure (17) pratiquée dans le manchon (10), ce ressort en deux parties (15) procurant également la force de pression axiale pour presser ce joint d'étanchéité pour les gaz (11) contre un épaulement (16) du manchon (10).

3. Procédé selon la revendication 1, **caractérisé en ce que** le joint d'étanchéité pour les liquides (12) dans le manchon (10) est fixé par l'effet élastique radial d'un ressort en deux parties (21) dans une rainure (23) pratiquée dans le manchon (10), ce ressort en deux parties (21) procurant également la force de pression axiale pour presser ce joint d'étanchéité pour les liquides (12) contre un épaulement (22) du manchon (10).

4. Élément d'étanchéité pour assurer l'étanchéité de l'arbre d'un rotor (1) dans un élément de compresseur, entre une chambre de rotor (2), formée dans un logement (3), dans laquelle est situé au moins un rotor (1) pour la compression du gaz, et une chambre de palier (6), formée dans le logement (3), dans laquelle est situé au moins un palier (5) lubrifié avec un liquide de lubrification, pour l'arbre (4), ledit élément (9) assurant une étanchéité comprenant un joint d'étanchéité flottant (11) pour les gaz et un joint d'étanchéité flottant (12) pour les liquides, **caractérisé en ce que** le joint d'étanchéité pour les gaz (11) et le joint d'étanchéité pour les liquides (12) sont montés ensemble dans un manchon (10).

5. Élément d'étanchéité selon la revendication 4, **caractérisé en ce que** le manchon (10), entre le joint d'étanchéité (11) pour les gaz et le joint d'étanchéité (12) pour les liquides, est muni d'au moins un canal de dégazage.

6. Élément d'étanchéité selon la revendication 4 ou 5, **caractérisé en ce que** le manchon (10), autour du joint d'étanchéité (11) pour les gaz est muni, sur son côté interne, d'une rainure (17) dans laquelle est prévu un ressort en deux parties (15) qui pousse le joint d'étanchéité (11) pour les gaz en direction axiale contre un épaulement (16) du manchon (10).

7. Élément d'étanchéité selon la revendication 6, **caractérisé en ce que** le joint d'étanchéité (11) pour les gaz comprend un anneau (13) qui, sur son côté extérieur, est muni d'une bague (18), et **en ce que** le ressort en deux parties (15) agit sur cette bague (18).

8. Élément d'étanchéité selon l'une quelconque des revendications 4 à 7, **caractérisé en ce que** le manchon (10), autour du joint d'étanchéité (12) pour les liquides, est muni, sur son côté interne, d'une rainure (23) dans laquelle on prévoit un ressort en deux parties (21), qui pousse le joint d'étanchéité (12) pour les liquides en direction axiale contre un épaulement (22) du manchon (10).

9. Élément d'étanchéité selon la revendication 8, **caractérisé en ce qu'**on prévoit, entre une partie du joint d'étanchéité (12) pour les liquides et l'épaulement (22) contre lequel il est poussé par le ressort (21), un anneau d'étanchéité résilient (25).

10. Élément d'étanchéité selon la revendication 9, **caractérisé en ce que** le joint d'étanchéité (12) pour les liquides comprend un anneau (19) possédant une bague (24) sur son côté externe et **en ce que** le joint d'étanchéité (25) est prévu entre ladite bague (25) et l'épaulement (22).

11. Élément d'étanchéité selon l'une quelconque des revendications 4 à 10, **caractérisé en ce que** le joint d'étanchéité (11) pour les gaz est un joint d'étanchéité en forme de labyrinthe.

12. Élément d'étanchéité selon l'une quelconque des revendications 4 à 11, **caractérisé en ce que** le joint d'étanchéité (12) pour les liquides est un joint d'étanchéité du type à filet de vis.
